# EUROPÄISCHE PATENTANMELDUNG

(11) **EP 0 612 990 A2**
(43) Veröffentlichungstag der Anmeldung: **31.08.1994**
(21) Anmeldenummer: 93115220.1
(22) Anmeldetag: 22.09.1993
(51) Int. Cl.: G01L 1/12, G01L 1/00

(54) **Anordnung und Verfahren zur Bestimmung des Schädigungsniveaus eines mechanisch belasteten Bauteils**

(30) Priorität: 26.02.1993 DE 4305951
(71) Anmelder: EUROCOPTER DEUTSCHLAND GmbH, D-81663 München (DE)
(72) Erfinder: Hammer, Joachim, Dr., D-90607 Rückersdorf (DE); Maier, Hans-Jürgen, Dr., D-57271 Hilchenbach (DE); Schindler, Rudolf, D-85579 Neubiberg (DE)

(57) **Zusammenfassung**

Um das Schädigungsniveau eines mechanisch belasteten Bauteils (2) mit Hilfe eines mit dem Bauteil verbundenen, unter der Wirkung der Bauteilbelastungen in seiner Gefügestruktur veränderten Probeteils (4) sowie einer die Gefügestruktur des Probeteils erfassenden Prüfeinrichtung und einer aus dem Prüfergebnis die bisherigen Bauteilbelastungen zur Bestimmung des Schädigungsniveaus ermittelnden Prüfdatenauswertung mit geringem zeitlichen und apparativen Aufwand exakt bestimmen zu können, besteht der Probeteil erfindungsgemäß aus einem metastabilen austenitischen Stahl, dessen volumetrischer Anteil an verformungsinduziertem α'-Martensit mit Hilfe einer Förstersonde (6) gemessen wird.

## Beschreibung

Die Erfindung bezieht sich auf eine Anordnung und ein Verfahren zur Bestimmung des Schädigungsniveaus eines mechanisch belasteten Bauteils nach dem Oberbegriff des Patentanspruchs 1 bzw. 5.

Bekannte Verfahren und Anordnungen dieser Art (DE 30 47 792 A1, EP 0 287 501 B1) arbeiten auf der Grundlage mikrostruktureller Gefügeverschiebungen, die im Probeteil durch die Bauteilbelastungen verursacht und mit Hilfe röntgenografischer oder elektronenstrahlmikroskopischer Untersuchungsmethoden ermittelt werden: um so das Schädigungsniveau (oder die Restlebensdauer) des Bauteils bestimmen zu können. Derartige Prüfungsmethoden erfordern jedoch einen hohen apparativen und zeitlichen Aufwand und gestatten eine allenfalls grobe Abschätzung der Bauteilbelastungen.

Aufgabe der Erfindung ist es, die Anordnung und das Verfahren der eingangs genannten Art so auszugestalten, daß mit geringem apparativen Aufwand eine rasche und genaue Bestimmung des Schädigungsgrades des Bauteils zu erzielen ist.

Diese Aufgabe wird erfindungsgemäß durch die im Patentanspruch 1 gekennzeichnete Anordnung bzw. das im Patentanspruch 5 gekennzeichnete Verfahren gelöst.

Erfindungsgemäß wird im Probeteil unter dem Einfluß der Bauteilbelastungen eine mit einer sprunghaften Änderung der Werkstoffeigenschaften verbundene Gefügephasenumwandlung erzielt, deren volumetrischer Anteil dem Ausmaß der Bauteilbelastungen, also bei zyklischen Beanspruchungen der Amplitudenhöhe und der Zyklenzahl entspricht und mit einfachen, zerstörungsfreien Meßmethoden rasch und mit hoher Genauigkeit ermittelt werden kann, so daß das Meßergebnis innerhalb enger Fehlergrenzen mit dem Schädigungsniveau bzw. der Restlebensdauer des Bauteils korreliert und der erforderliche gerätetechnische und zeitliche Aufwand ganz erheblich verringert wird.

Gemäß einem weiteren wesentlichen Aspekt der Erfindung besteht der Probeteil nach Anspruch 2 aus metastabilem austenitischem Stahl und die Meßsonde ist zur Bestimmung des verformungsinduzierten α' -Martensitanteils vorgesehen, wodurch sich eine meßtechnisch besonders einfache und exakte Korrelation zwischen dem Schädigungsgrad des Bauteils und den hieraus resultierenden Gefügephasenanteilen ergibt. Eine weitere wesentliche Vereinfachung wird in diesem Fall dadurch erzielt, daß der α' -Martensitanteil nach Anspruch 3 durch Messung der Permeabilität des Probeteils mit Hilfe einer Förstersonde ermittelt wird.

Da die Gefügephasenanteile des Probeteils problemlos am Einbauort gemessen werden können, ohne daß der Probeteil vom Bauteil entfernt werden muß, lassen sich Probeteil und Bauteil, falls beide aus dem gleichen Werkstoff bestehen, im Rahmen der Erfindung ohne weiteres aus einem Stück herstellen. Jedoch ist die Erfindung gleichermaßen auch für Bauteile, die aus einem anderen Material als der Probeteil, etwa aus Faserverbundwerkstoff, bestehen, in der Weise anwendbar, daß der Probeteil gemäß Anspruch 4 getrennt vom Bauteil vorgefertigt und mit diesem dauerhaft kraftübertragend verbunden wird.

Die Auswertung des Meßergebnisses wird in der Praxis dadurch ganz wesentlich erleichtert, daß gemäß Anspruch 6 eine den Zusammenhang zwischen dem Belastungsniveau und den entsprechenden Gefügephasenanteilen des Probeteils angebende Eichkurve experimentell vorermittelt wird.

Gemäß Anspruch 7 wird bei zyklischen Belastungen eine detailliertere Information über das Schädigungsniveau des Bauteils vorzugsweise in der Weise erhalten, daß aus den gemessenen Gefügephasenanteilen unter Einbeziehung vorgegebener Spannungsamplituden die Anzahl der bisherigen Belastungszyklen bestimmt wird. Schließlich läßt sich erfindungsgemäß, wie nach den Ansprüchen 8 und 9 bevorzugt, aus den gemessenen Gefügephasenanteilen auch die Restlebensdauer bzw. die Restzyklenzahl des Bauteils ermitteln.

Die Erfindung wird nunmehr anhand eines Ausführungsbeispieles in Verbindung mit den Zeichnungen näher erläutert. Es zeigen in stark schematisierter Darstellung
- Fig. 1: ein mechanisch belastetes Bauteil mit einem daran befestigten Probeteil und einer Meßsonde zur Ermittlung der Gefügephasenanteile des Probeteils;
- Fig. 2: eine den Zusammenhang zwischen den Gefügephasenanteilen (V') und dem Belastungsniveau (Sₚ) des Probeteils angebende Eichkurve;
- Fig. 3: eine Bauteil-Kennlinie zur Ermittlung des Schädigungsgrades (S_{T}) in Abhängigkeit vom Belastungsniveau (Sₚ);
- Fig. 4: ein Diagramm zur Ermittlung der bisherigen Lastzyklenzahl (Nᵢₛₜ) in Abhängigkeit vom Belastungsniveau (Sₚ) des Probeteils für verschiedene Spannungsamplituden und
- Fig. 5: die Ermittlung der verbleibenden Restzyklenzahl anhand der Lebensdauer-Kennlinie (Wöhler-Kurve) des Bauteils.

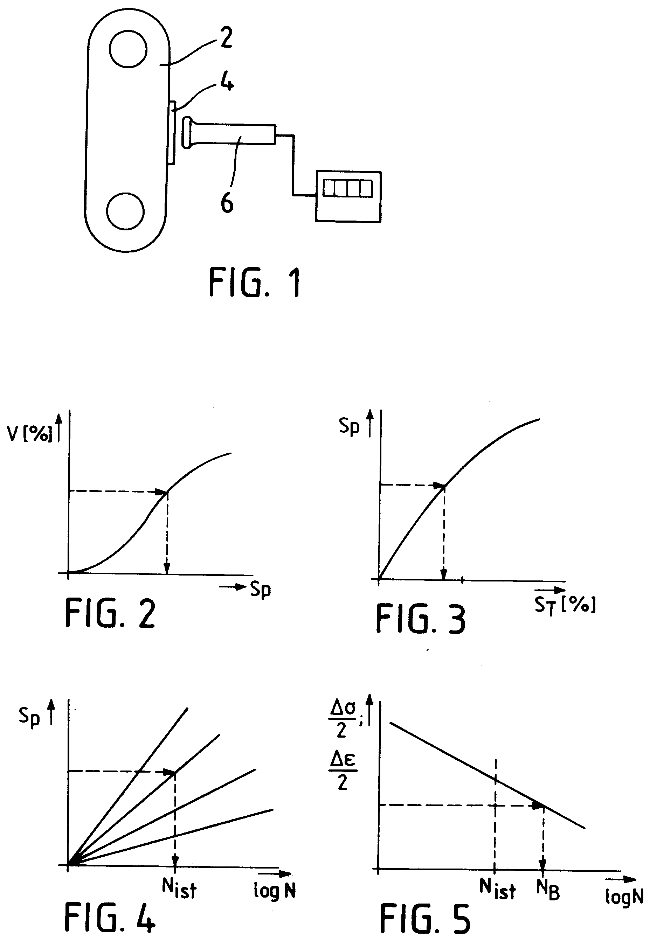

Fig. 1 zeigt eine Anordnung zur Bestimmung des Schädigungsgrades bzw. der Restlebensdauer eines zyklisch belasteten Bauteils 2, beispielsweise eines Verbindungsteils aus Faserverbundwerkstoff. Mit diesem kraftschlüssig verbunden ist ein Probeteil 4, etwa in Form eines dünnwandigen Probeplättchens, welches zunächst vollständig aus metastabilem austenitischen Stahl besteht. Unter dem Einfluß der Bauteilbelastungen ergibt sich eine sprunghafte mikrostrukturelle Gefügephasenumwandlung im Probeteil 4, wobei sich ein dem Ausmaß des Belastungsniveaus, also bei zyklischen Beanspruchungen der Größe der Spannungs- bzw. Dehnungsamplitude sowie der Lastspielzahl entsprechender Anteil paramagnetischer Austenitphase in eine ferromagnetische α'-Martensitphase umformt. Durch Messung der Permeabilität des Probeteils 4 mit Hilfe einer Förstersonde 6 wird der volumetrische Gefügephasenanteil V' des verformungsinduzierten Martensits im Probeteil 4 in vorgegebenen Inspektionsintervallen, gegebenenfalls aber auch kontinuierlich bestimmt und hieraus anhand der in Fig. 2 schematisch dargestellten, experimetell vorermittelten Eichkurve, die den Zusammenhang zwischen dem Martensitanteil V' und dem zugehörigen Belastungsniveau des Probeteils 4 angibt, das Ausmaß der bisherigen Belastungen, Sₚ festgestellt. Dieses ergibt dann aus der in Fig. 3 gezeigten, bauteilspezifischen Belastungs-Schädigungskennlinie den zu ermittelnden Schädigungsgrad des Bauteils 2.

Bei zyklischen Belastungen mit vorgegebener Spannungs- oder Dehnungsamplitude läßt sich anhand des in Fig. 4 für verschiedene Amplitudenhöhen schematisch dargestellten Kennliniendiagramms des Probeteils 4 aus dem gemessenen Belastungsniveau Sₚ unmittelbar die Anzahl der bisherigen Belastungszyklen, Nᵢₛₜ, bestimmen. Unter Berücksichtigung der sich für das Bauteil durch das Wöhler-Diagramm bzw. den Manson-Coffin-Plot für die vorgegebene Spannungs- bzw. Dehnungsamplitude festgelegten Bruchlastspielzahl, N_{B}, wird die verbleibende Restzyklenzahl des Bauteils 2 als Differenz zwischen N_{B} und Nᵢₛₜ ermittelt.

Die Erfindung ist nicht nur für Faserverbund-Bauteile, sondern grundsätzlich für beliebige Bauteilwerkstoffe anwendbar, wobei die belastungsmäßig kritischen Bauteilzonen, gegebenenfalls auch im Bauteilinneren, jeweils mit einem oder mehreren Probeplättchen 4 versehen werden. Anstelle von austenitischem Stahl kann für den Probeteil 4 auch ein anderer metastabiler Indikatorwerkstoff gewählt werden, dessen Ausgangsgefüge sich unter der Wirkung der Bauteilbelastungen mit einem nach Maßgabe des akkumulierten Belastungspotentials zunehmend größeren Volumenanteil sprunghaft in eine andere Gefügephase umwandelt und dabei seine Werkstoffeigenschaften signifikant ändert. Ferner lassen sich in der beschriebenen Weise nicht nur zyklische Bauteilbelastungen, sondern auch Kriechverformungen, die den Schädigungsgrad bzw. das Lebensdauerpotential des Bauteils 2 beeinflussen, gleichermaßen rasch und exakt erfassen.

## Patentansprüche

1. Anordnung zur Bestimmung des Schädigungsniveaus eines mechanisch belasteten Bauteils, mit einem mit dem Bauteil verbundenen, unter der Wirkung der Bauteilbelastungen in seiner Gefügestruktur veränderten Probeteil, einer die Gefügestruktur des Probeteils erfassenden Prüfeinrichtung und einer aus dem Prüfergebnis die bisherigen Bauteilbelastungen zur Bestimmung des Schädigungsniveaus ermittelnden Prüfdatenauswertung,
**dadurch gekennzeichnet,** daß
der Probeteil (4) aus einem metastabilen, sich entsprechend den Bauteilbelastungen zwischen einzelnen Gefügephasen umwandelnden Werkstoff besteht und als Prüfeinrichtung eine den jeweils umgewandelten Gefügephasenanteil im Probeteil bestimmende Meßsonde (6) vorgesehen ist.

2. Anordnung nach Anspruch 1,
**dadurch gekennzeichnet,** daß
der Probeteil (4) aus metastabilem austenitischen Stahl besteht und die Meßsonde (6) zur Bestimmung des verformungsinduzierten α'-Martensitanteils vorgesehen ist.

3. Anordnung nach Anspruch 2,
**dadurch gekennzeichnet,** daß
die Meßsonde (6) als Förstersonde zur Bestimmung der Permeabilität des Probeteils (4) ausgebildet ist.

4. Anordnung nach einem der vorhergehenden Ansprüche,
**dadurch gekennzeichnet,** daß
das Bau- und der Probeteil (2, 4) aus unterschiedlichen Materialien hergestellt und kraftschlüssig miteinander verbunden sind.

5. Verfahren zur Bestimmung des Schädigungsniveaus eines mechanisch belasteten Bauteils, bei dem die Gefügestruktur eines mit dem Bauteil verbundenen, unter der Wirkung der Bauteilbelastungen mikrostrukturell veränderten Probeteils untersucht und hieraus das Ausmaß der bisherigen Belastungen ermittelt und anhand der Festigkeitscharakteristik des Bauteils dessen Schädigungsniveaus bestimmt wird,
**dadurch gekennzeichnet,** daß
für den Probeteil ein metastabiler Werkstoff mit einer sich entsprechend den Bauteilbelastungen zwischen einzelnen Gefügephasen umwandelnden Gefügestruktur gewählt und zur Ermittlung der bisherigen Belastungen der jeweils umgewandelte Gefügephasenanteil im Probeteil gemessen wird.

6. Verfahren nach Anspruch 5,
**dadurch gekennzeichnet,** daß
zur Auswertung des gemessenen Gefügephasenanteils eine den Zusammenhang zwischen diesem und den Belastungen des Probeteils angebende Eichkurve experimentell vorermittelt wird (Fig. 2).

7. Verfahren nach Anspruch 5 oder 6,
**dadurch gekennzeichnet,** daß
aus dem gemessenen Gefügephasenanteil unter Einbeziehung vorgegebener Spannungs- und/oder Dehnungsamplituden die Anzahl der bisherigen Belastungszyklen bestimmt wird (Fig. 4).

8. Verfahren nach einem der Ansprüche 5 bis 7,
**dadurch gekennzeichnet,** daß
aus dem gemessenen Gefügephasenanteil die Restlebensdauer unter Berücksichtigung der Gesamtlebensdauer des Bauteils vorherbestimmt wird.

9. Verfahren nach den Ansprüchen 7 und 8,
**dadurch gekennzeichnet,** daß
aus der Anzahl der bisherigen Belastungszyklen anhand der Wöhler-Kennlinie die Restzyklenzahl des Bauteils vorherbestimmt wird (Fig. 5).
